# EUROPEAN PATENT SPECIFICATION

(11) **EP 2 455 887 B1**
(45) Date of publication and mention of the grant of the patent: **24.08.2016**
(21) Application number: 10191635.1
(22) Date of filing: 18.11.2010
(51) Int. Cl.: G06K 7/00

(54) **Method and apparatus for communicating between a security module and a host device**
Verfahren und Vorrichtung zur Kommunikation zwischen einem Sicherheitsmodul und einer Hostvorrichtung
Procédé et appareil permettant de communiquer entre un module de sécurité et un dispositif hôte

(43) Date of publication of application: 23.05.2012
(73) Proprietor: Nagravision S.A., 1033 Cheseaux-sur-Lausanne (CH)
(72) Inventor: Osen, Karl, 1974, Arbaz (CH); Odoom, Ernest, CH-1201 Geneva (CH)
(74) Representative: Leman Consulting S.A.

(56) References cited:
- US-B1- 6 223 298

## Description

### INTRODUCTION

The present invention relates to the domain of radio frequency electromagnetic interference and more specifically to methods and devices for the reduction of such interference in electronic circuits.

### STATE OF THE ART

With the increasing use of higher and higher signal frequencies in the operation of electronic circuits, the problems related to electromagnetic interference or EMI are becoming more acute. In the domain of conditional access, the use of a security module is commonplace. A security module is usually used in cooperation with a host device which comprises at least a card reader to interface with the security module. The host device may further comprise a cryptographic module and other related conditional access hardware and software. The security module holds personalised information such as cryptographic keys and the like, which need to be kept secret. The security module is generally a portable device which is detachable from the host device.

A common example of a security module is an electronic chip housed on a card, generally in the form of a credit card, a SIM card or a micro-SIM card or other similar support. The card is usually presented to the host module, or more particularly to the card reader within the host module, via a slot in the host module. Contact is made between the chip and the card reader by a set of contacts which come to rest on a set of corresponding contact pads on a surface of the card, which connect to the chip.

With the tendency for operating frequencies of the aforementioned security modules to be higher, i.e. in ranges in excess of several hundreds of megahertz, any connections to the security module which carry signals with frequency components in such ranges, namely connections to clock and data pins for example, will tend to emit electromagnetic radiation. Such electromagnetic radiation may be intercepted by a third party and used to breach the security of the security module. For example by monitoring the electromagnetic radiation during the time that the security module transmits a secret key, it may be possible for a third party to reconstruct the secret key for malicious purposes. Similarly, a security module may be susceptible to interference by sufficiently strong electromagnetic fields generated externally to the security module for the purpose of influencing the operation of the security module and/or card reader during operation. Such interference, generated either externally or internally by the security module or any of the other circuitry within the host during operation, is known as electromagnetic interference or EMI.

The EMI phenomenon is well known in the electronics industry. Indeed, there are industry-standard limits placed on electronic circuits relative to the amount of electromagnetic radiation such circuits are allowed to generate. These limits are designed to minimise the possibility of circuits susceptible to generating large quantities of EMI from affecting neighbouring circuits and to avoid the risk of physical harm to humans in the vicinity of such circuits.

It is usual, in the domain of electronic circuits which are designed to operate at radio frequencies (RF), to enclose such circuits within a box whose walls are entirely covered by a material which has the properties of providing shielding against electromagnetic radiation. This generally provides sufficient protection against radiation produced by the circuit from escaping towards the outside of the enclosed box and against radiation generated outside of the box from penetrating into the box and interfering with the operation of the circuit.

However, in the case of a host device designed to receive a security module via a slot or port, it is difficult to prevent EMI from escaping since the port presents a discontinuity in the enclosure and therefore a discontinuity in the shielding thereby exposing an area where EMI may escape. United States Patent Publication number US 7,351,919 B1 describes a port cover for limiting transfer of electromagnetic radiation from the port of a host device when the security module is functioning within the port. A port cover is mounted over the slot for the chip card after the chip card is entered. The port cover is lined with a conductive material, which contributes to the EMI shielding properties of the port cover and permits for an electrical circuit to be completed when the port cover is in position, thus allowing for the detection of whether or not the port cover is properly closed.

There also exist devices for providing a shield around electronic components susceptible to emitting EMI such as the device described in United States Patent Publication number US 5,436,803 which teaches of a flexible envelope surrounding an electronic circuit card within the host device, the electronic circuit card comprising the offending component. The flexible envelope comprises an insulating sheet such as polyethylene and a sheet of conductive fibres such as metalised nylon giving a resistivity in the order of a tenth of an ohm. Another example is described in International Patent Application Publication number WO 2005/106953 A1, which discloses a screening layer, comprising a layer of soft magnetic material of high relative permeability such as iron, nickel or cobalt or any of their alloys, placed on the surface of the component susceptible to emit the offending EMI. The document further goes on to describe the use of a further layer of additional hard material, such as diamond-like carbon, on the surface of the offending component to prevent access to the component through mechanical or chemical means.

In United States Patent Publication number 6,223,298, a communications interface is disclosed, enabling a processor unit to dialogue with an IC card through a serial bus. This invention solves a problem whereby communication between the processor and the IC card is only possible at predetermined transmission rates, such rates being fixed by the serialization means of the interface and taking only a very limited number of values. Even with the processor working at nominal (usually high) speed, the rates are typically small. The invention therefore is aimed at allowing for the number of possible rates to be substantially higher and indeed for the values of the rates themselves to be close to the maximum operating frequency of the IC card, thereby possibly leading to the generation of EMI. This is useful for example in testing of the IC cards, where the tester (processor) has to be run at high speed. No regard is given as to the possible drawbacks of EMI being generated within such a system.

### BRIEF SUMMARY OF THE INVENTION

In view of the prior art, it is an aim of the present invention to provide a means for reducing the amount of electromagnetic interference detectable from the outside of a host device while the host device is communicating with a security module, especially when the host device comprises a slot or port through which the security module is inserted.

It is a further aim of the present invention to provide a means for reducing the amount of electromagnetic interference escaping from a security module towards electronic components comprised within a host device while the security module is communicating with the host device.

It is a further aim of the present invention to provide for such reduction in electromagnetic interference while retaining ease of physical access to the host device by the security module, thereby allowing ease of exchanging one security module for another. This requirement therefore precludes the possibility of using a port cover or a flexible envelope as described in the prior art as well as the use of screening layers around the security module. Additionally, an aim of the present invention is to reduce the manufacturing costs associated with the production of host devices intended to receive security modules which function at operating frequencies high enough to generate the undesired EMI and therefore the use of expensive screening layers such as those described in the prior art is not a desired option.

The aims of the present invention are therefore achieved using a method according to claim 1 and a device according to claim 2.

### BRIEF DESCRIPTION OF THE DRAWINGS

The present invention will be better understood thanks to the detailed description which follows and the accompanying drawings, which are given as non-limiting examples of embodiments of the invention, where:
Fig. 1 shows a security module connected to a host device as exists in the state of the art.
Fig. 2 shows security module connected to a host device according to an embodiment of the present invention.
Fig. 3 shows a converter module as employed in an embodiment of the present invention.
Fig. 4 illustrates how a conversion module according to an embodiment of the present invention converts a plurality of low frequency signals to form a high frequency signal.
Fig. 5 shows a chip card with a security module inserted through a flap into a housing according to an embodiment of the present invention.

### DETAILED DESCRIPTION

It is well known to those who are familiar with the domain of radio frequency (RF) electromagnetic interference (EMI) that a contributory variable in determining the amount of EMI that will be emitted from a wire is proportional to the length of that wire and that another contributory variable is the frequency content of a signal transported by the wire. In a preferred embodiment of the present invention it is therefore sought to minimise the length of any wires which carry such signals with high frequency content in the host device/security module ensemble and to minimise the number of such wires.

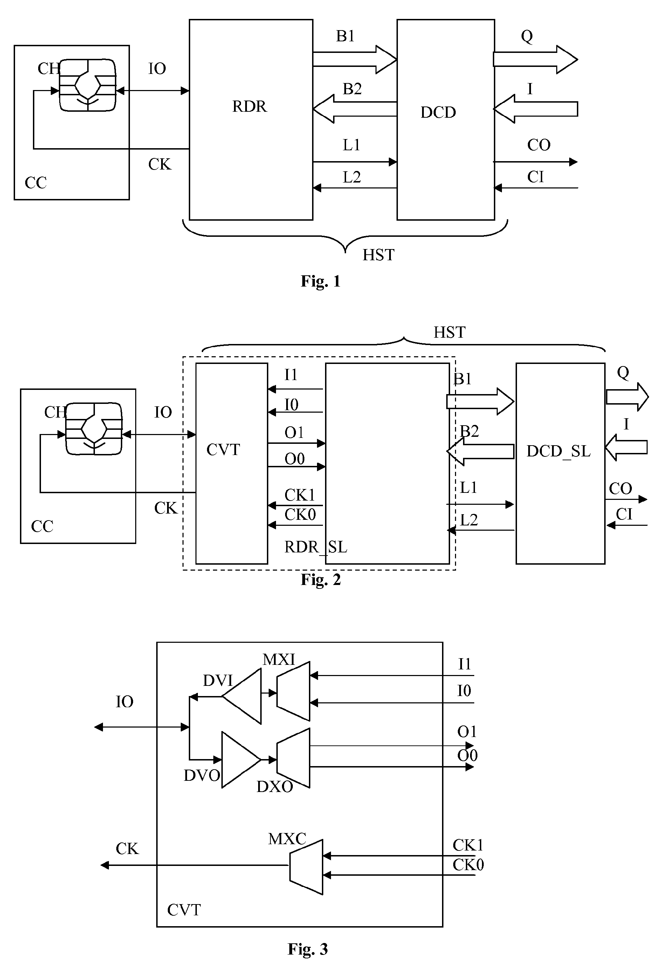

Fig. 1 shows a security module connected to a host device. The security module is in the form of an electronic chip (CH) housed on a chip card (CC). This configuration is generally known in the state of the art. The security module or chip (CH) on its chip card (CC) is inserted into a slot in the host device (HST) and the chip's contact pads enter into contact with a set of contacts connected to the host device's card reader (RDR). For simplicity, the figure only shows the connection to the chip's input/output (IO) and clock (CK) pads. In actual fact the card reader would generally also come into contact with the chip's other pads such as reset, power supply, ground and memory programming pads for example. As will be seen later, when the invention is described, according to an embodiment of the present invention, since the input/output pad (IO) and the clock pad (CK) are the ones which carry signals of the highest frequency, particular attention is directed towards the treatment of connections going to these pads. Fig. 1 also shows a cryptographic module (DCD) in the host device (HST). The cryptographic module communicates with the reader via various busses and signals, represented by the illustrated bus lines (B1, B2) and signal lines (L1, L2). The cryptographic module produces outputs (Q, CO) to be further processed or to be sent outwith the host device (HST) and may also receive various busses and signals (I, Cl) from outside of the host device (HST) or from other components within the host device (HST). Any or all of the signals described above may comprise high-frequency characteristics leading to the generation of EMI or leading to sensitivity towards incident EMI.

Fig. 2 shows an embodiment of the present invention in which a converter module (CVT) has been introduced to the configuration shown in Fig. 1. The converter module (CVT) is used as an interface between the security module (CH) and the card reader (RDR_SL) and its purpose is to slow down the high frequency signals i.e. the input/output signal (IO) and the clock signal (CK) so that card reader (RDR_SL) and indeed any of the other circuits comprised in the host device may operate at a frequency which is low enough not to generate any EMI or at least to substantially reduce the amount of EMI which is generated. It is worth noting that as well as the signals between the card reader (RDR_SL) and the converter module (CVT) being slowed down, the other signals going between the card reader (RDR_SL) and any other modules in the host device will likewise be slowed down. As shown in the example depicted by Fig. 2, the converter module (CVT) outputs the clock signal (CK) to the security module (CH), which is converted from two separate sub-clock signals (CK1, CK0) coming from the card reader (RDR_SL), which is modified with respect to the card reader (RDR) of Fig.1 to work at a lower frequency. Similarly, the input/output signal (IO) for the security module (CH) is converted from two separate inputs (I1, I0) from the card reader (RDR_SL) and to two separate outputs (01,00) to the card reader (RDR_SL). Fig. 2 also shows the card reader (RDR_SL) communicating with a decoder (DCD_SL), which consequently may also operate at a reduced frequency. For simplicity, Fig. 2 only shows the converter module (CVT) producing a one-to-two conversion for each line. In reality, in order to achieve much more substantial reductions in signal frequencies, the converter module would convert at a ratio of 8 to 1 or 16 to 1 or higher for example.

Fig. 3 shows an embodiment of the converter module (CVT) in greater detail. The clock signal (CK) for the security module is generated by multiplexing two separate, suitably phased sub-clock signals (CK1, CK0). Similarly, the input/output signal (IO) is multiplexed from two inputs (11, I0) and de-multiplexed to produce two separate outputs (01, 00). Again, the figure shows a simplified example of two lines being multiplexed onto one. The embodiment in general however allows for parallel busses of say 8 data bits plus a parity bit for example in the reader to be multiplexed onto one line by the converter module thus allowing the security module to work at the required higher frequencies whereas the card reader and other related circuitry in the host can run at significantly lower frequencies.

In order to further reduce the amount of EMI radiated from the host device, the cabling used for the busses and signals between the converter module (CVT) and the card reader (RDR_SL) may be of shielded type. Indeed, as a general rule, any of the inter-module cabling within the host device is preferably of a shielded type.

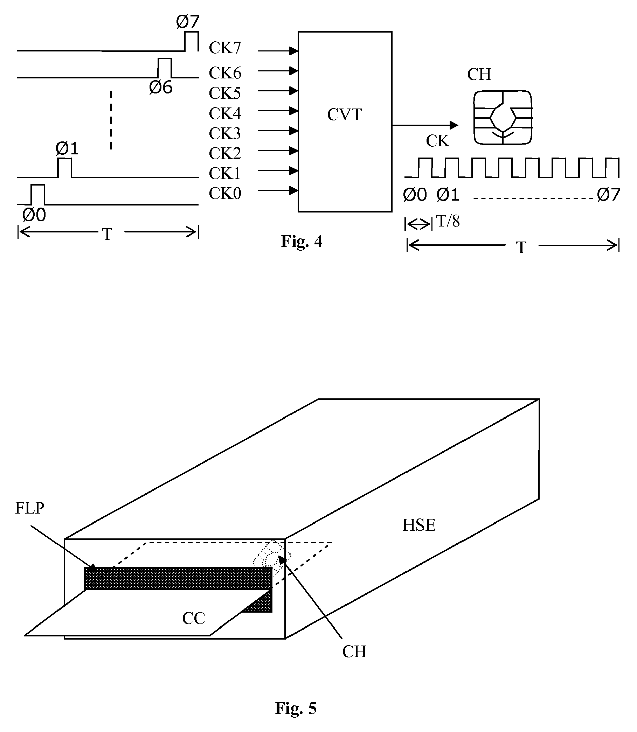

Fig. 4 shows an example of how the converter module (CVT) may produce a clock signal for the security module (CH) using eight sub-clock lines (CK7, CK6, ..., CK0). The clock signal (CK) has a clock period (t) and is generated by multiplexing eight sub-clocks (CK7, CK6, ..., CK0) each having a sub-clock period (T), which is eight times the clock period (t=T/8). The sub-clock period (T) is divided into eight separate phases (Ø7, Ø6, ..., Ø0). Each of the eight sub-clocks has one pulse during only one phase of the sub-clock period (T). In the example given for the described embodiment of the present invention, the eight phases are consecutive and non-overlapping. The pulses of each of the consecutive sub-clocks occur during consecutive phases. In this way, each consecutive sub-clock contributes to each consecutive pulse of the clock thereby producing the necessary clock frequency of eight times larger than the sub-clock frequencies. A similar method is used for the input part of the input/output line. Eight different sub-input lines represent the state of the input/output line during eight consecutive phases of the clock (CK) and the eight sub-input lines are multiplexed onto the input/output (IO) pin. For example, for each sub-input line, during the phase where it is active it will give a pulse for a first logic state and no pulse for a second logic state. Similarly, the output part of the input/output pin, i.e. driven by the security module (CH) when the security module is in output mode, is time-multiplexed onto eight sub-output lines, each consecutive sub-output line representing the state of the input/output pin during consecutive phases of the clock (CK).

In order to further reduce any EMI generated from any of the sub-inputs, sub-outputs or sub-clocks, any of the known techniques may be further employed to reduce the slew rate of these lines. For example by making the lines resistive, the resulting related RC constant will contribute to slowing down the transients of the lines.

According to an example rather than multiplexing lines as shown above, a multiplication technique is used so that lower frequencies can be used throughout the host until the higher frequencies are required at the security module. For example, whereas a security module is to operate at 100MHz, the circuits within the host device may operate at a more modest frequency based on a reference clock of say 1 MHz, thereby producing substantially low amounts of EMI. The converter module (CVT) in this case comprises a frequency multiplier based on a phase locked loop for example, which is used to multiply the reference frequency by 100 for example in order to generate the higher frequency just where it is required for the security module.

According to an embodiment of the present invention, further techniques are employed to provide means to minimise the amount of EMI from penetrating from the interior of the host device to the exterior. As described above, for a host communicating with a high-speed security module, at least the security module's clock (CK) and input/output (IO) connections may be susceptible to producing significant amounts of EMI. The high-speed connections are kept as short as possible as it is known that the length over which a high frequency signal is present is a significant variable contributing to the amount of EMI emitted. Additionally, these lines are preferably made from shielded cabling.

According to yet another embodiment of the present invention, a shield is built to substantially reduce any EMI generated inside the host device from penetrating to the outside of the host. In this embodiment, the shield is in the form of a flap covering the port or slot of the host device through which the chip card which comprises the security module is inserted. The flap is made of an electrically conductive epoxy material or an electrically conductive resin and is suitably dimensioned and positioned so as to adequately enclose the chip card as it is inserted into the slot. In this manner, since the epoxy or resin exhibits elastic properties, a seal is formed around the chip card when it is inserted into the slot. Since the epoxy or resin is electrically conductive, the flap provides EMI shielding such that any EMI generated within the host device does not propagate outside of the host device or is at least substantially attenuated so as not to be considered a problem. According to variants of this embodiment of the invention, the flap may be formed by one sheet of the epoxy or resin, attached to either the top or bottom of the slot or the flap can be made from a larger sheet of the epoxy or resin with a slit cut near the middle of the sheet to receive the chip card or the flap may be realised by two sheets of epoxy or resin material, the two sheets being suitably fixed to the slot such that the edges of the two sheets come together thus forming the flap near the middle of the slot.

It is worth noting that the technical effect on the EMI afforded by any of the embodiments of the present invention serves not only to reduce the amount of EMI penetrating from the inside of the host device to the outside, but it further serves to reduce the amount of EMI penetrating into the host from outside and thereby reduces the possibility of the components within the housing being affected by interference from outside.

According to a further embodiment of the present invention, a reduction in the amount of EMI escaping from the inside of the host device towards the outside is achieved by making a housing for the host device, or at least for the components of the host device which are susceptible to producing EMI, from a conductive plastic material. These materials provide shielding for EMI due to their conductive properties and do not require the additional steps of adding conductive layers or conductive paint and therefore contribute towards minimising the manufacturing cost of a housing providing EMI shielding.

In another embodiment of the present invention, provision is made to shield the EMI generated by pathways carrying high frequency signals from contaminating other electronic circuits within the host device and from escaping outside of the host device. Preferably, if measures have been taken to minimise the number of pathways concerned and to reduce to reduce the lengths of such pathways to a minimum, then the aforementioned provision is readily realisable. In this embodiment, as well as making use of the shielding flap as described above to prevent EMI from escaping from the host, use is made of a shielding box which isolates those pathways carrying high frequency signals. For example, as mentioned in the previous examples, the two pathways input/output (10) and clock (CK) require to be isolated. The offending pathways are geographically isolated and physically located in a region near the slot of the host, where they will come into contact with the security module. The flap (FLP) is used to isolate the EMI generated by the pathways from the outside of the host. This isolation is completed by the fact that the host is housed in either a metal box or a box made from conductive plastic as described above. This box is referred to as a housing. Furthermore, in order to isolate the EMI from the rest of the host's electronic components, a wall is made within the housing (HSE) either from metal or from conductive plastic to electromagnetically isolate the offending pathways from the rest of the circuitry in the host device. According to another embodiment, instead of simply forming a wall, the metal or conductive plastic may be shaped to enclose the offending pathways and connect to the flap, thus creating an EMI-impermeable box within the host device. Joints between the metal or conductive plastic are preferably sealed with electrically conductive epoxy resin as are gaps between the conductive plastic or metal and the flap thereby assuring a maximum isolation.

Conversely, or in combination, as in another embodiment of the present invention, instead of enclosing the offending pathways is an EMI-shielded enclosure, the rest of the circuits in the host device, which may be susceptible to EMI coming from the high-frequency pathways mentioned above, may be insulated from externally-generated EMI by covering them with EMI-shielding conductive epoxy or by wrapping them with EMI-shielding conductive tape. As with all of the techniques involving electrically conductive adhesives, tapes, resins or epoxies, such treatment may be part of a multi-layer treatment where alternating layers of non-conducting and conducting adhesives, tapes, resins or epoxies are applied.

If any of the mentioned high-speed pathways require to cover more than the minimum possible distance, it is preferable to convert such signals to a differential signal over two pathways located in close proximity - preferably adjacent to each other at minimum pitch or, if such pathways exist as wires, then as a twisted pair. The signals should preferably be of a current mode, of minimum common-mode voltage level and have a minimal voltage swing between logic states. A low-voltage differential protocol such as the communication protocol known as LVDS is well-suited for such pathways. According to another embodiment of the present invention, LVDS drivers are used to convert the clock signal from a single-ended wire to a two-ended differential current mode bus terminated with a hundred ohm resistor and conforming to the LVDS communication protocol. One end of the two-ended bus is used to drive the clock pad of the security module. Similar drivers are used to convert the input/output signal to be compatible with the LVDS protocol.

## Claims

1. A method for communicating between a security module (CH), said security module (CH) being housed on a chip card (CC), and a host device (HST), said host device (HST) comprising a card reader (RDR_SL) for connecting to the security module (CH) via at least one communication line operating at a first frequency, said method comprising:
operating the host device (HST) at a second frequency, said second frequency being lower than the first frequency, said operation generating a plurality of signals toward the card reader (RDR_SL), at least one of which having a third frequency, said third frequency being equal to or lower than the second frequency, the card reader (RDR_SL) receiving said plurality of signals; and
converting, by the card reader (RDR_SL), at least one of the received signals, said conversion yielding at least the communication line operating at the first frequency,
**characterised in that**:
said received signals comprise two separate, suitably phased sub-clock signals (CK0, CK1) and at least two inputs for said security module (I0, I1);
said conversion being:
generating a clock signal (CK) for the security module by multiplexing said two separate, suitably phased sub-clock signals (CK0, CK1);
multiplexing from said at least two inputs (10, I1) an input signal (I) for input into the security module; and
de-multiplexing an output signal (O) from said security module to produce at least two separate outputs (00, O1).

2. A host device (HST) comprising a card reader (RDR_SL) for connecting a security module (CH) to the host device (HST), said security module (CH) being housed on a chip card (CC), said connection being made via at least one communication line, said communication line being operated at a first frequency, said card reader (RDR_SL) adapted to receive a plurality of signals, said host device (HST) **characterised in that**:
the card reader (RDR_SL) is adapted to process the plurality of signals at a second frequency, said second frequency being lower than the first frequency, said plurality of signals having a frequency less than or equal to the second frequency; and
the card reader (RDR_SL) comprises a converter module for converting (CVT) at least one of the plurality of signals to yield at least the communication line operating at the first frequency,
**characterised in that**:
said received signals comprise two separate, suitably phased sub-clock signals (CK0, CK1) and at least two inputs for said security module (10, I1),
and said converter is adapted to generate a clock signal (CK) for the security module by multiplexing said two separate, suitably phased sub-clock signals (CK0, CK1) and
is adapted for multiplexing from said at least two inputs (10, I1) an input signal (I) for input into the security module and
is adapted for de-multiplexing an output signal (O) from said security module to produce at least two separate outputs (O0, O1).

3. The host device (HST) according to claim 2, wherein said communication line is made from cable which is adapted to provide electromagnetic shielding.

4. The host device (HST) according to claim 2, wherein a shield is built around the host device, said shield adapted to reduce electromagnetic interference from penetrating to the outside of the host.

5. The host device (HST) according to claim 2, wherein the host device (HST) comprises a housing, said housing comprising conductive plastic material.

6. The host device (HST) according to claim 2, wherein said communication line is enclosed within a box which is made from metal or from conductive plastic.

7. The host device (HST) according to claim 2, wherein all components comprising the host device (HST), apart from the communication line, are enclosed within a box which is made from metal or from conductive plastic.

8. The host device (HST) according to claim 2, wherein said communication line comprises a differential pair.

9. The host device (HST) according to claim 2, wherein the differential pair is adapted to operate in a current mode.

10. The host device (HST) according to claim 2, wherein the differential pair is adapted to operate according to a LVDS low-voltage differential protocol.

## Patentansprüche

1. Verfahren zum Kommunizieren zwischen einem Sicherheitsmodul (CH), das auf einer Chipkarte (CC) untergebracht ist, und einem Host-Gerät (HST), das ein Kartenlesegerät (RDR_SL) zur Verbindung mit dem Sicherheitsmodul (CH) über mindestens eine Kommunikationsleitung umfasst, die auf einer ersten Frequenz arbeitet, wobei das Verfahren folgendes umfasst:
Betreiben des Host-Geräts (HST) auf einer zweiten Frequenz, wobei die zweite Frequenz niedriger als die erste Frequenz ist, besagter Betrieb erzeugt eine Vielzahl von Signalen hin zu dem Kartenlesegerät (RDR_SL), von denen mindestens eines eine dritte Frequenz umfasst,
wobei die dritte Frequenz gleich oder niedriger als die zweite Frequenz ist und das Kartenlesegerät (RDR SL) besagte Vielzahl von Signalen empfängt; und
Konvertierung, durch das Kartenlesegerät (RDR_SL), mindestens eines der empfangenen Signale, so dass die Konvertierung mindestens die Kommunikationsleitung ergibt, die auf der ersten Frequenz arbeitet,
**gekennzeichnet dadurch, dass**:
die empfangenen Signale zwei getrennte, angemessen abgestimmte untergeordnete Taktsignale (CK0, CK1) umfassen sowie mindestens zwei Eingaben für das Sicherheitsmodul (I0, I1);
wobei besagte Konvertierung:
ein Taktsignal (CK) für das Sicherheitsmodul durch Multiplexieren der beiden getrennten, angemessen abgestimmten untergeordneten Taktsignale (CK0, CK1) erzeugt;
aus den mindestens zwei Eingaben (10, I1) ein Eingabesignal (I) zur Eingabe in das Sicherheitsmodul multiplexiert; und
ein Ausgabesignal (O) aus dem Sicherheitsmodul demultiplexiert, um mindestens zwei getrennte Ausgaben (O0, O1) herzustellen.

2. Host-Gerät (HST) mit einem Kartenlesegerät (RDR_SL), um ein Sicherheitsmodul (CH) mit dem Host-Gerät (HST) zu verbinden, wobei das Sicherheitsmodul (CH) auf einer Chipkarte (CC) untergebracht ist, wobei die Verbindung über mindestens eine Kommunikationsleitung erfolgt, wobei die Kommunikationsleitung auf einer ersten Frequenz betrieben wird und das Kartenlesegerät (RDR_SL) geeignet zum Empfang einer Vielzahl von Signalen ist, wobei das Host-Gerät (HST) **dadurch gekennzeichnet ist, dass**:
das Kartenlesegerät (RDR_SL) geeignet ist, um die Vielzahl von Signalen auf einer zweiten Frequenz zu verarbeiten, wobei die zweite Frequenz niedriger als die erste Frequenz ist, wobei die Vielzahl von Signalen eine Frequenz umfasst, die niedriger als oder gleich der zweiten Frequenz ist; und
das Kartenlesegerät (RDR_SL) ein Konvertierungsmodul zum Konvertieren (CVT) mindestens eines der Vielzahl von Signalen umfasst, damit sich mindestens die Kommunikationsleitung ergibt, die auf der ersten Frequenz arbeitet,
**gekennzeichnet dadurch, dass**:
die empfangenen Signale zwei getrennte, angemessen abgestimmte untergeordnete Taktsignale (CK0, CK1) umfassen sowie mindestens zwei Eingaben für das Sicherheitsmodul (10, I1),
und der Konverter geeignet ist, ein Taktsignal (CK) für das Sicherheitsmodul durch Multiplexieren der beiden getrennten, angemessen abgestimmten untergeordneten Taktsignale (CK0, CK1) zu erzeugen, und
geeignet ist, aus den mindestens zwei Eingaben (10, I1) ein Eingabesignal (I) zur Eingabe in das Sicherheitsmodul zu multiplexieren, und
geeignet ist, ein Ausgabesignal (O) aus dem Sicherheitsmodul zu de-multiplexieren, um mindestens zwei getrennte Ausgaben (O0, O1) herzustellen.

3. Host-Gerät (HST) nach Anspruch 2, wobei die Kommunikationsleitung aus einem Kabel gemacht ist, das geeignet ist, elektromagnetische Abschirmung zu bieten.

4. Host-Gerät (HST) nach Anspruch 2, wobei eine Abschirmung rund um das Host-Gerät gebaut ist, damit weniger elektromagnetische Interferenz aus dem Host nach außen dringt.

5. Host-Gerät (HST) nach Anspruch 2, wobei das Host-Gerät (HST) ein Gehäuse umfasst, wobei besagtes Gehäuse leitfähigen Kunststoff umfasst.

6. Host-Gerät (HST) nach Anspruch 2, wobei die Kommunikationsleitung in einem Kasten eingeschlossen ist, der aus Metall oder leitfähigem Kunststoff ist.

7. Host-Gerät (HST) nach Anspruch 2, wobei alle Bestandteile des Host-Geräts (HST), abgesehen von der Kommunikationsleitung, in einem Kasten eingeschlossen sind, der aus Metall oder leitfähigem Kunststoff ist.

8. Host-Gerät (HST) nach Anspruch 2, wobei die Kommunikationsleitung ein Differentialpaar umfasst.

9. Host-Gerät (HST) nach Anspruch 2, wobei das Differentialpaar geeignet ist, um im Strommodus zu arbeiten.

10. Host-Gerät (HST) nach Anspruch 2, wobei das Differentialpaar geeignet ist, um gemäß einem LVDS-Niederspannungs-Differentialprotokoll zu arbeiten.

## Revendications

1. Méthode pour la communication entre un module de sécurité (CH), ledit module de sécurité (CH) étant logé sur une carte à puce (CC), et un dispositif hôte (HST), ledit dispositif hôte (HST) comprenant un lecteur de carte (RDR_SL) pour la connexion au module de sécurité (CH) par au moins une ligne de communication qui fonctionne à une première fréquence, ladite méthode comprenant:
faire fonctionner le dispositif hôte (HST) à une deuxième fréquence, ladite deuxième fréquence étant inférieure à la première fréquence, ladite opération générant une pluralité de signaux vers le lecteur de carte (RDR_SL), au moins l'un desquels ayant une troisième fréquence, ladite troisième fréquence étant égale ou inférieure à la deuxième fréquence, le lecteur de carte (RDR_SL) recevant ladite pluralité de signaux; et
convertir, au moyen du lecteur de carte (RDR_SL), au moins un des signaux reçus, ladite conversion produisant au moins la ligne de communication qui fonctionne à la première fréquence,
**caractérisée en ce que**:
lesdits signaux reçus comprennent deux signaux de sous-horloge séparés et convenablement échelonnés (CK0, CK1) et au moins deux entrées pour ledit module de sécurité (10, I1);
ladite conversion étant:
générer un signal d'horloge (CK) pour le module de sécurité en multiplexant lesdits deux signaux de sous-horloge séparés et convenablement échelonnés (CK0, CK1);
multiplexer à partir desdites au moins deux entrées (I0, I1) un signal d'entrée (I) pour l'introduction dans le module de sécurité; et
démultiplexer un signal de sortie (O) dudit module de sécurité pour produire au moins deux sorties séparées (O0, O1).

2. Dispositif hôte (HST) comprenant un lecteur de carte (RDR_SL) pour connecter un module de sécurité (CH) au dispositif hôte (HST), ledit module de sécurité (CH) étant logé sur une carte à puce (CC), ladite connexion étant faite au moyen d'au moins une ligne de communication, ladite ligne de communication étant opérée à une première fréquence, ledit lecteur de carte (RDR_SL) adapté pour recevoir une pluralité de signaux, ledit dispositif hôte (HST) **caractérisé en ce que**:
le lecteur de carte (RDR_SL) est adapté pour traiter la pluralité de signaux à une deuxième fréquence, ladite deuxième fréquence étant inférieure à la première fréquence, ladite pluralité de signaux ayant une fréquence inférieure ou égale à la deuxième fréquence; et
le lecteur de carte (RDR_SL) comprend un module convertisseur pour convertir (CVT) au moins un de la pluralité de signaux pour produire au moins la ligne de communication qui fonctionne à la première fréquence,
**caractérisé en ce que**:
lesdits signaux reçus comprennent deux signaux de sous-horloge séparés et convenablement échelonnés (CK0, CK1) et au moins deux entrées pour ledit module de sécurité (10, I1),
et ledit convertisseur est adapté pour générer un signal d'horloge (CK) pour le module de sécurité en multiplexant lesdits deux signaux de sous-horloge séparés et convenablement échelonnés (CK0 CK1) et
il est adapté pour multiplexer à partir desdites au moins deux entrées (10 I1) un signal d'entrée (I) pour l'introduction dans le module de sécurité et
il est adapté pour démultiplexer un signal de sortie (O) dudit module de sécurité pour produire au moins deux sorties séparées (O0, O1).

3. Dispositif hôte (HST) selon la revendication 2, où ladite ligne de communication est faite à partir d'un câble qui est adapté pour fournir de la protection électromagnétique.

4. Dispositif hôte (HST) selon la revendication 2, où un écran de protection est construit autour du dispositif hôte, ledit écran adapté pour réduire l'interférence électromagnétique qui pénètre vers l'extérieur de l'hôte.

5. Dispositif hôte (HST) selon la revendication 2, où le dispositif hôte (HST) comprend un logement, ledit logement comprenant de la matière plastique conductrice.

6. Dispositif hôte (HST) selon la revendication 2, où ladite ligne de communication est placée dans une boîte qui est faite en métal ou en plastique conducteur.

7. Dispositif hôte (HST) selon la revendication 2, où tous les composants comprenant le dispositif hôte (HST), à part la ligne de communication, sont placés dans une boîte qui est faite en métal ou en plastique conducteur.

8. Dispositif hôte (HST) selon la revendication 2, où ladite ligne de communication comprend une paire différentielle.

9. Dispositif hôte (HST) selon la revendication 2, où la paire différentielle est adaptée pour fonctionner dans un mode courant.

10. Dispositif hôte (HST) selon la revendication 2, où la paire différentielle est adaptée pour fonctionner conformément à un protocole différentiel à basse tension LVDS.
